# EUROPEAN PATENT SPECIFICATION

(11) **EP 4 324 281 B1**
(45) Date of publication and mention of the grant of the patent: **12.08.2026**
(21) Application number: 22711835.3
(22) Date of filing: 01.03.2022
(51) Int. Cl.: H04W 74/0833, H04W 74/0836, H04W 74/0838, H04W 74/00

(54) **RANDOM ACCESS RESPONSE DIFFERENTIATION**
DIREKTZUGRIFFSANTWORTDIFFERENZIERUNG
DIFFÉRENCIATION DE RÉPONSES D'ACCÈS ALÉATOIRE

(30) Priority: 15.04.2021 US 202163201165 P; 28.02.2022 US 202217652906
(43) Date of publication of application: 21.02.2024
(60) Divisional application: 24180391.5 / 4 408 114; 26190003.9
(73) Proprietor: QUALCOMM INCORPORATED, San Diego, California 92121-1714 (US)
(72) Inventor: LEI, Jing, San Diego, California 92121 (US); HE, Linhai, San Diego, California 92121 (US); GAAL, Peter, San Diego, California 92121 (US)
(74) Representative: Tomkins & Co
(86) International application number: PCT/US2022/070886
(87) International publication number: WO 2022/221798

(56) References cited:
- CN-A- 111 989 973
- CMCC: "Discussion on early identification of RedCap UEs", vol. RAN WG1, no. e-Meeting; 20210125 - 20210205, 18 January 2021 (2021-01-18), XP051970629, Retrieved from the Internet <URL:https://ftp.3gpp.org/tsg_ran/WG1_RL1/TSGR1_104-e/Docs/R1-2101050.zip R1-2101050.docx> [retrieved on 20210118]
- SAMSUNG: "UE complexity reduction", vol. RAN WG1, no. e-Meeting; 20210125 - 20210205, 19 January 2021 (2021-01-19), XP051971428, Retrieved from the Internet <URL:https://ftp.3gpp.org/tsg_ran/WG1_RL1/TSGR1_104-e/Docs/R1-2101214.zip R1-2101214 UE complexity reduction-cl.docx> [retrieved on 20210119]
- INTEL CORPORATION: "On UE complexity reduction for RedCap devices", vol. RAN WG1, no. e-Meeting; 20210125 - 20210205, 19 January 2021 (2021-01-19), XP051971130, Retrieved from the Internet <URL:https://ftp.3gpp.org/tsg_ran/WG1_RL1/TSGR1_104-e/Docs/R1-2100660.zip R1-2100660 - Intel - RedCap_LowComplexity.docx> [retrieved on 20210119]
- OPPO: "Discussion on UE complexity reduction", vol. RAN WG1, no. e-Meeting; 20210125 - 20210205, 25 January 2021 (2021-01-25), XP051975879, Retrieved from the Internet <URL:https://ftp.3gpp.org/tsg_ran/WG1_RL1/TSGR1_104-e/Docs/R1-2101777.zip R1-2101777.doc> [retrieved on 20210125]
- QUALCOMM INCORPORATED: "Complexity Reduction for RedCap Devices", vol. RAN WG1, no. e-Meeting; 20210125 - 20210205, 22 January 2021 (2021-01-22), XP051975869, Retrieved from the Internet <URL:https://ftp.3gpp.org/tsg_ran/WG1_RL1/TSGR1_104-e/Docs/R1-2101766.zip R1-2101766 Complexity Reduction for RedCap Devices.docx> [retrieved on 20210122]
- ZTE: "UE complexity reduction for reduced capability NR devices", vol. RAN WG1, no. e-Meeting; 20210125 - 20210205, 18 January 2021 (2021-01-18), XP051970453, Retrieved from the Internet <URL:https://ftp.3gpp.org/tsg_ran/WG1_RL1/TSGR1_104-e/Docs/R1-2100564.zip R1-2100564 UE complexity reduction for reduced capability NR devices.doc> [retrieved on 20210118]

## Description

### FIELD OF THE DISCLOSURE

Aspects of the present disclosure generally relate to wireless communication and to techniques and apparatuses for differentiating random access responses.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" or "forward link" refers to the communication link from the BS to the UE, and "uplink" or "reverse link" refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.

CN 111 989 973 A discloses an information transmission method is applied to a base station, and includes: sending a physical downlink control channel (PDCCH) signaling corresponding to a type of a user equipment (UE) according to the type of the UE; wherein the PDCCH signaling carries random access response control information for the UE; wherein different types of UEs correspond to different PDCCH signalings, and the random access response control information is config-ured to indicate scheduling information associated with a random access response.

CMCC: "Discussion on early identification of RedCap UEs", 3GPP DRAFT; R1-2101050 discloses the feasibility, pros and cons for early identification of RedCap UEs and proposals are given.

INTEL CORPORATION: "On UE complexity reduction for RedCap devices", 3GPP DRAFT; R1-2100660 discusses the support of UE complexity reduction features

OPPO: "Discussion on UE complexity reduction", 3GPP DRAFT; R1-2101777, discusses potential complexity reduction techniques for RedCap UE.

### SUMMARY

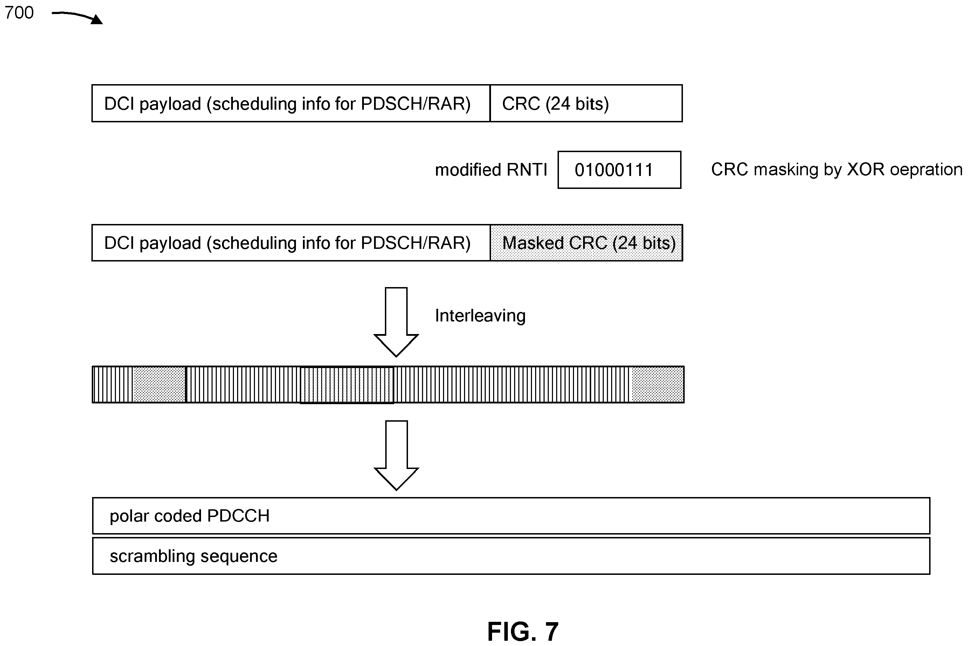

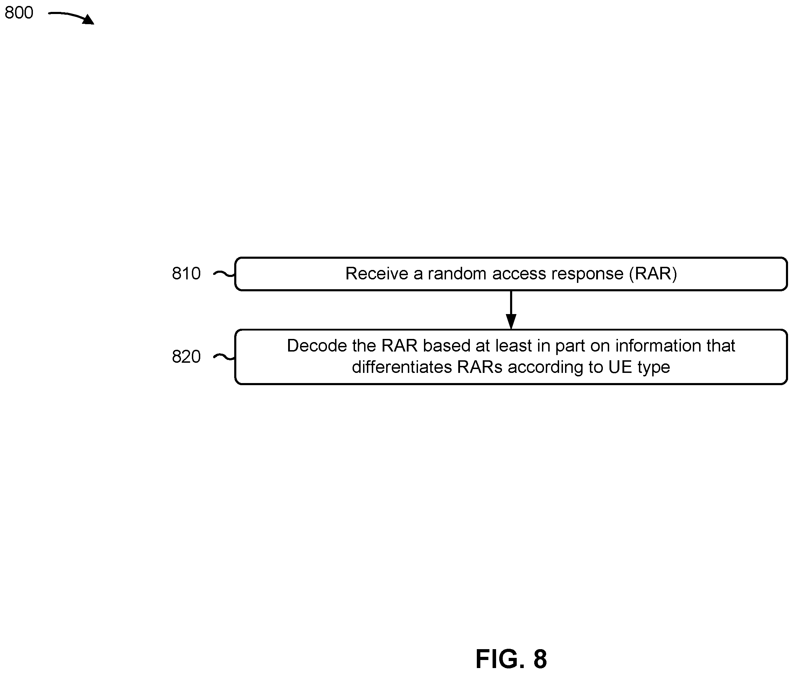

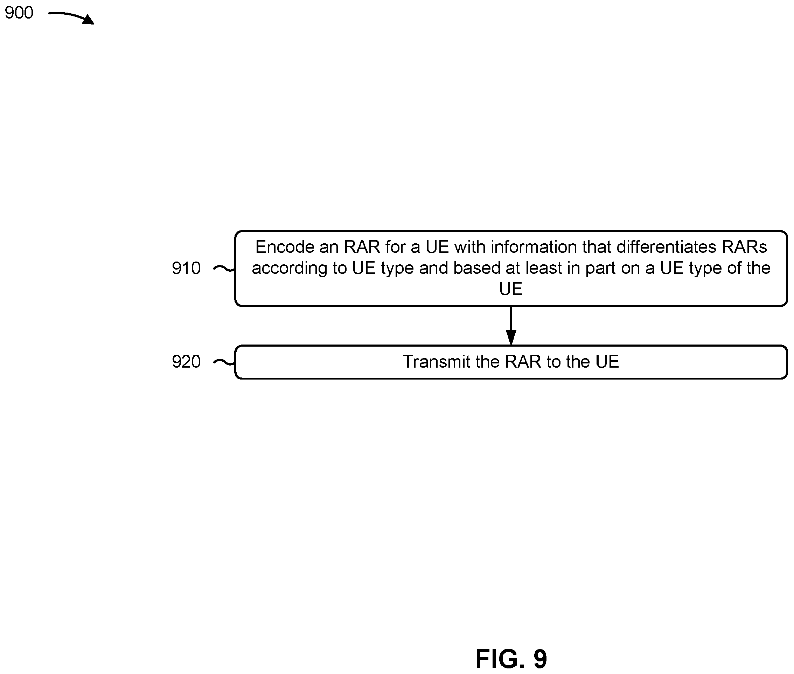

The invention is described herein with reference to the appended claims. In particular, the independent claims are based on the parts of the description with reference to Figure 7, Figure 8 (fourteenth and fifteenth aspects) and Figure 9 (eleventh aspect) and the dependent claims are based on the parts of the description with reference to Figure 8 (twenty seventh, twenty eighth, twenty ninth, fourth, fifth, sixth, twelfth, sixteenth, seventeenth, eighteenth, twentieth, twenty first, twenty fourth and twenty fifth aspects). Other aspects are disclosed for illustrative purposes.

In some aspects, a UE for wireless communication includes a memory and one or more processors, coupled to the memory, configured implement the method according to claim 1.

In some aspects, a base station for wireless communication includes a memory and one or more processors, coupled to the memory, and configured to implement the method according to claim 15.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating types of devices, in accordance with the present disclosure.
Fig. 4 illustrates an example of configurations for a New Radio reduced capacity (RedCap) UE, in accordance with the present disclosure.
Fig. 5 is a diagram illustrating an example of differentiating random access responses (RARs), in accordance with the present disclosure.
Fig. 6 is a diagram illustrating an example of overlapping and non-overlapping bandwidth parts for differentiating RARs, in accordance with the present disclosure.
Fig. 7 is a diagram illustrating an example of encoding downlink control information for scheduling an RAR, in accordance with the present disclosure.
Fig. 8 is a diagram illustrating an example process performed, for example, by a UE, in accordance with the present disclosure.
Fig. 9 is a diagram illustrating an example process performed, for example, by a base station, in accordance with the present disclosure.
Figs. 10-11 are block diagrams of example apparatuses for wireless communication, in accordance with the present disclosure.

### DETAILED DESCRIPTION

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

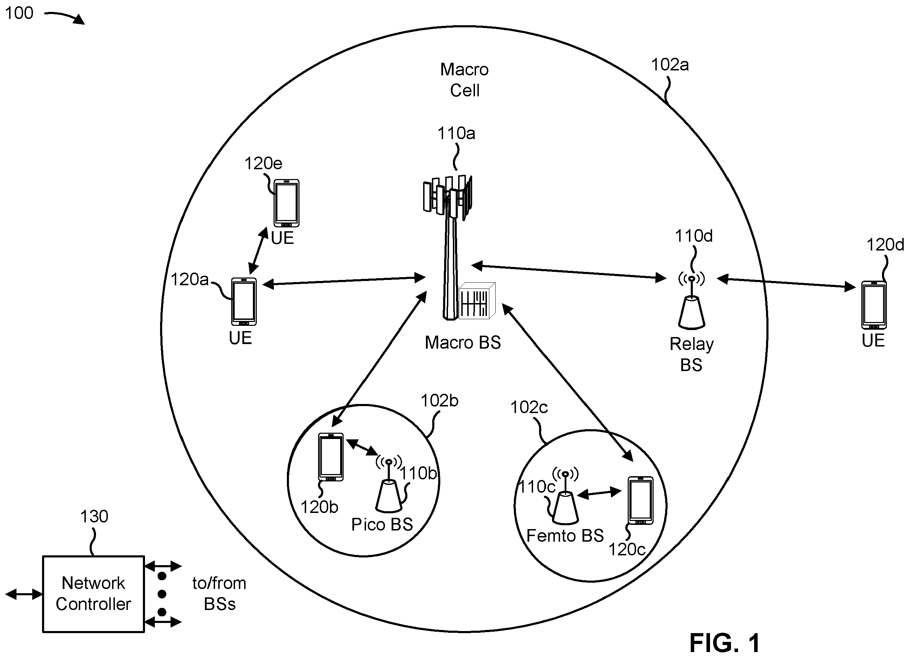

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

In some aspects, the term "base station" (e.g., the base station 110) or "network entity" may refer to an aggregated base station, a disaggregated base station, an integrated access and backhaul (IAB) node, a relay node, and/or one or more components thereof. For example, in some aspects, "base station" or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network entity" may refer to one device configured to perform one or more functions, such as those described herein in connection with the base station 110. In some aspects, the term "base station" or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network entity" may refer to any one or more of those different devices. In some aspects, the term "base station" or "network entity" may refer to one or more virtual base stations and/or one or more virtual base station functions. For example, in some aspects, two or more base station functions may be instantiated on a single device. In some aspects, the term "base station" or "network entity" may refer to one of the base station functions and not another. In this way, a single device may include more than one base station.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system (GPS) device, or any other suitable device that is configured to communicate via a wireless or wired medium.

Some UEs may be reduced capacity (RedCap) UEs that may decode a random access response (RAR) that is part of a random access channel (RACH) procedure for establishing a radio resource control (RRC) connection. There may be UEs of different types that may be able to decode an RAR only if the RAR is configured for the UE type. Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

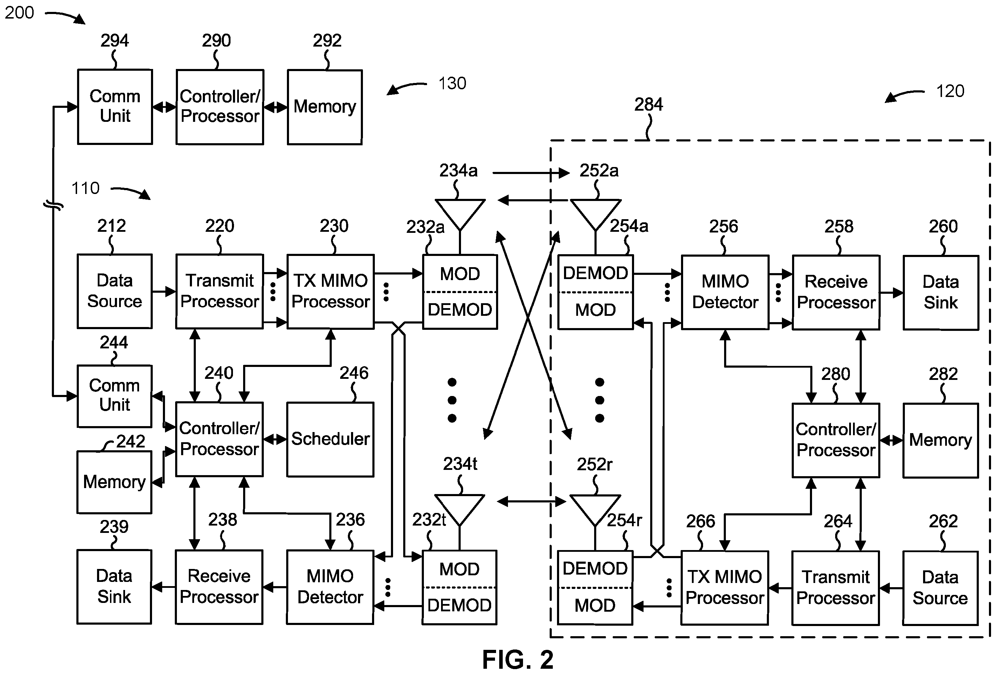

Fig. 2 is a diagram illustrating an example 200 of a base station 110 in communication with a UE 120 in a wireless network 100, in accordance with the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of Fig. 2.

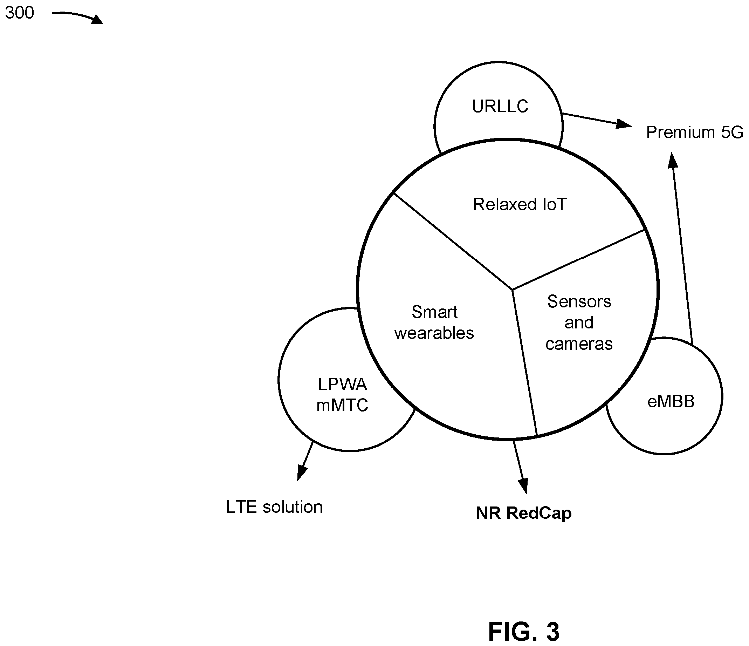

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 3-11).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 3-11).

Deployment of communication systems, such as 5G NR systems, may be arranged in multiple manners with various components or constituent parts. In a 5G NR system, or network, a network node, a network entity, a mobility element of a network, a radio access network (RAN) node, a core network node, a network element, or a network equipment, such as a base station, or one or more units (or one or more components) performing base station functionality, may be implemented in an aggregated or disaggregated architecture. For example, a BS (such as a Node B, evolved NB (eNB), NR BS, 5G NB, access point (AP), a TRP, or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an IAB network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

Controller/processor 240 of base station 110, controller/processor 280 of UE 120, and/or any other component(s) of Fig. 2 may perform one or more techniques associated with differentiating RARs as part of a RACH procedure, as described in more detail elsewhere herein. For example, controller/processor 240 of base station 110, controller/processor 280 of UE 120, and/or any other component(s) of Fig. 2 may perform or direct operations of, for example, process 800 of Fig. 8, process 900 of Fig. 9, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, process 900 of Fig. 9, and/or other processes as described herein. In some aspects, executing instructions may include running the instructions, converting the instructions, compiling the instructions, and/or interpreting the instructions, among other examples.

In some aspects, the UE 120 includes means for receiving an RAR, and/or means for decoding the RAR based at least in part on information that differentiates RARs according to UE type. The means for the UE 120 to perform operations described herein may include, for example, one or more of antenna 252, demodulator 254, MIMO detector 256, receive processor 258, transmit processor 264, TX MIMO processor 266, modulator 254, controller/processor 280, or memory 282.

In some aspects, the base station includes means for encoding an RAR for a UE with information that differentiates RARs according to UE type and based at least in part on a UE type of the UE, and/or means for transmitting the RAR to the UE. The means for the base station to perform operations described herein may include, for example, one or more of transmit processor 220, TX MIMO processor 230, modulator 232, antenna 234, demodulator 232, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

Fig. 3 is a diagram 300 illustrating types of devices, in accordance with the present disclosure.

As shown in Fig. 3, ultra-reliable low-latency communication (URLLC) devices and enhanced mobile broadband (eMBB) devices may be considered NR premium devices (e.g., UEs). Some devices, such as low power wide-area (LPWA) devices or massive machine type communication (mMTC) devices, may be considered enhanced LTE devices. Fig. 3 shows that some wireless communication devices are not NR premium UEs, but rather devices with reduced capabilities. Such devices with reduced capabilities may include relaxed IoT devices, smart wearables, sensors, and video surveillance cameras. Reduced capability devices may be referred to as NR RedCap devices, RedCap devices, Red Cap devices, Red-Cap devices, redcap devices, red cap devices, red-cap devices, and/or NR RedCap UEs. NR RedCap devices have also been referred to as NR Light devices or NR Lite devices. For purposes of explanation, the term NR RedCap UE may be used in the aspects described herein.

In some aspects, an NR RedCap UE may have reduced capabilities due to a capability or configuration that provides for less peak throughput, longer latency, less reliability, more power consumption efficiency, less system overhead, and/or less resource costs. An NR RedCap UE may be subject to relaxed latency or reliability requirements. In some aspects, an NR RedCap UE may have only one or two transmission or reception antennas.

In some aspects, an NR RedCap UE may have or be configured to use a subset of features available to NR premium UEs or other full-featured NR UEs that may be used for personal communication. In some aspects, an NR RedCap UE may have a mandatory set of features and an optional set of features, where one or more of the optional features in an NR RedCap UE are mandatory for NR premium UEs. In some aspects, a standard chart or matrix of features may be used to specify whether a device is an NR RedCap UE.

In some aspects, NR RedCap UEs may include wearable devices, such as smart watches, eHealth related devices, personal protection equipment, exercise monitors, or medical monitoring devices. NR RedCap UEs may include industrial sensors, such as pressure sensors, humidity sensors, thermometers, motion sensors, accelerometers, or actuators. NR RedCap UEs may include surveillance cameras, low-end smartphones, and/or low-end IoT devices.

As indicated above, Fig. 3 is provided as an example. Other examples may differ from what is described with regard to Fig. 3.

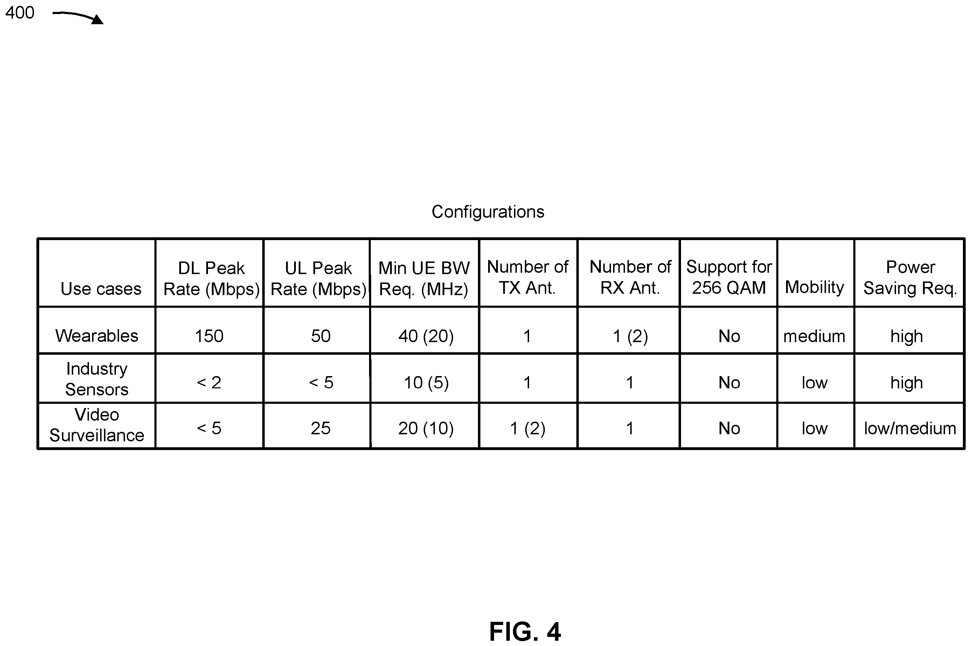

Fig. 4 illustrates an example 400 of configurations for an NR RedCap UE, in accordance with the present disclosure.

In some aspects, the NR RedCap UE may support reduced bandwidth and a reduced quantity of transmission and reception antennas. For example, at least for FR1, the NR RedCap UE may support a maximum bandwidth in downlink (DL) or uplink (UL) of 20 MHz or 40 MHz. The NR RedCap UE may support a maximum bandwidth that is separately configured for DL and UL. For an NR RedCap UE with reduced bandwidth capability (e.g., down from 100 MHz for FR1), the maximum bandwidth in UL and DL may be reduced for control information or data. An NR RedCap UE with reduced bandwidth capability may not be expected to support carrier aggregation or dual connectivity, which may be required of non-NR RedCap UEs. In some embodiments, an NR RedCap UE may support a maximum of one transmission antenna and a maximum of one or two reception antennas.

Fig. 4 shows other configurations that NR RedCap UEs may support, based at least in part on a type of NR RedCap UE. Different types may have different subsets of features or limitations. For example, an NR RedCap UE that is a wearable device may support a DL peak rate of 150 Mbps, an UL peak rate of 50 Mbps, a bandwidth requirement of 20 MHz or 40 MHz, one transmission antenna, and one or two reception antennas. The wearable device may not support 256-QAM. The wearable device may have medium mobility and a high power saving requirement. The wearable device may still have latency or reliability requirements that are similar to eMBB.

In some aspects, an NR RedCap UE that is an industry sensor may support a DL peak rate of less than 2 Mbps, an UL peak rate of less than 5 Mbps, a bandwidth requirement of 5 MHz or 10 MHz, one transmission antenna, and one reception antenna. The sensor may not support 256-QAM. The sensor may have low mobility and a high power saving requirement. The sensor may have a latency requirement of less than 100 milliseconds (ms) or 5-10 ms for safety-related sensors. The sensor may have a reliability requirement of 99.99%.

In some aspects, an NR RedCap UE that is a video surveillance camera may support a DL peak rate of less than 5 Mbps, an UL peak rate of less than 25 Mbps, a bandwidth requirement of 10 MHz or 20 MHz, one or two transmission antennas, and one reception antenna. The camera may not support 256-QAM. The camera may have low mobility and a high power saving requirement. The camera may have a latency requirement of less than 500 ms and a reliability requirement of 99% - 99.99%.

In sum, an NR RedCap UE may have a determined configuration based at least in part on a type of the NR RedCap UE. As a result, the NR RedCap UE may save power, processing resources, and signaling resources supporting a reduced set of features. In some aspects, an NR RedCap UE may support a same power saving mode, a same set of processing capabilities and timeline, or a set of fallback capabilities as another type of NR UE, which may also have reduced capabilities or may not have reduced capabilities. For example, an NR RedCap UE may have a set of reduced capabilities, but may fall back to a set of further reduced capabilities.

An NR RedCap UE may be required to perform a RACH procedure for accessing a channel and establishing a connection. The RACH procedure may be the same procedure for every UE, even though different UEs have different UE capabilities. In some scenarios, a base station may transmit multiple RACH messages, such as multiple RARs, to multiple UEs. A UE with limited capabilities may waste power and processing resources attempting to decode and process an RAR that may not be intended for the UE.

According to various aspects described herein, a UE may receive an RAR as part of a RACH procedure and decode the RAR based at least in part on information that differentiates RARs according to UE type. That is, the UE may decode the RAR if the information indicates that the RAR is to be decoded by the UE type of the UE. An RAR may be intended for a first UE type (e.g., Type A) or a second UE type (e.g., Type B), but not both UE types. Examples of a first UE type versus a second UE type may include: a RedCap UE vs. a non-RedCap UE, a RedCap UE with one receive antenna branch vs. a RedCap UE with two receive antenna branches, a UE that supports coverage enhancement vs. a UE that does not support coverage enhancement, a UE that supports small data transmissions (SDTs) vs. a UE that does not support SDTs, or a UE that supports RAN slices vs. a UE that does not support RAN slices. By differentiating RARs, the UE may decode RARs intended for the UE (or UE type of the UE) and conserve power and processing resources by not attempting to decode and process RARs that are not intended for the UE (or UE type of the UE). The UE may receive the information for RAR differentiation or obtain the information from stored configuration information. The information may indicate how the UE is to determine whether to decode an RAR or other RACH message.

As indicated above, Fig. 4 is provided as an example. Other examples may differ from what is described with regard to Fig. 4.

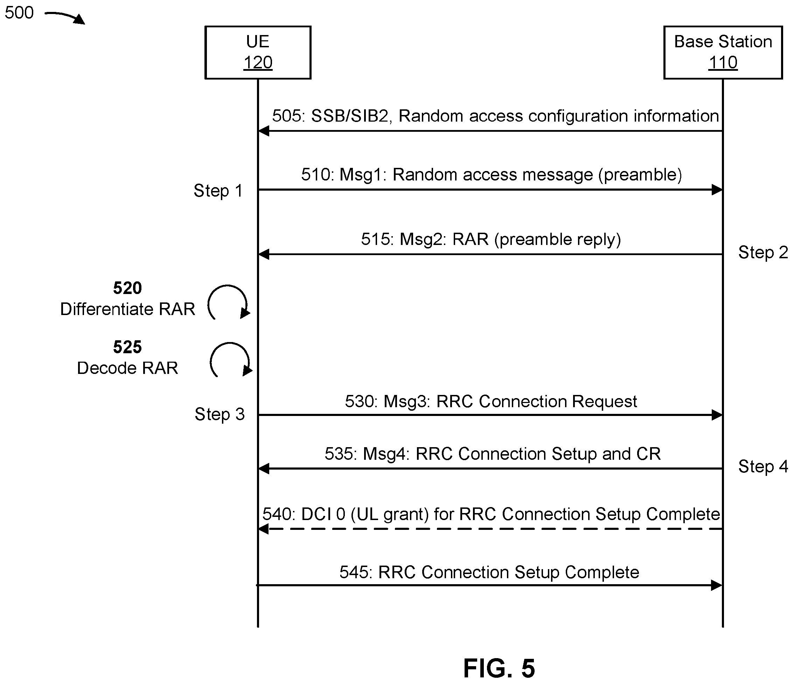

Fig. 5 is a diagram illustrating an example 500 of differentiating RARs, in accordance with the present disclosure. As shown in Fig. 5, a base station 110 and a UE 120 may communicate with one another to perform a 4-step RACH procedure.

As shown by reference number 505, the base station 110 may transmit, and the UE 120 may receive, random access configuration information. In some aspects, the random access configuration information may be transmitted in and/or indicated by system information (e.g., in one or more system information blocks (SIBs), such as a SIB 2) and/or a synchronization signal block (SSB), such as for contention-based random access. Additionally, or alternatively, the random access configuration information may be transmitted in an RRC message and/or a physical downlink control channel (PDCCH) order message that triggers a RACH procedure, such as for contention-free random access. The random access configuration information may include information for receiving an RAR and differentiating RARs based on UE type.

As shown by reference number 510, the UE 120 may transmit a random access message (RAM), which may include a preamble (sometimes referred to as a random access preamble, a physical RACH (PRACH) preamble, or a RAM preamble). The message that includes the preamble may be referred to as a message 1, Msg1, msg1, MSG1, a first message, or an initial message in a 4-step RACH procedure. The RAM may include a random access preamble identifier.

As shown by reference number 515, the base station 110 transmits an RAR as a reply to the preamble. The message that includes the RAR may be referred to as message 2, Msg2, msg2, MSG2, or a second message in a 4-step RACH procedure. In some aspects, the RAR may indicate the detected random access preamble identifier (e.g., received from the UE 120 in Msg1). Additionally, or alternatively, the RAR may indicate an uplink grant or a resource allocation to be used by the UE 120 to transmit message 3 (Msg3).

In some aspects, as part of the second step of the 4-step random access procedure, the base station 110 may transmit a PDCCH communication for the RAR. The PDCCH communication may schedule a physical downlink shared channel (PDSCH) communication that includes the RAR. For example, the PDCCH communication may indicate a resource allocation for the PDSCH communication. Also as part of the second step of the 4-step RACH procedure, the base station 110 may transmit the PDSCH communication for the RAR, as scheduled by the PDCCH communication. The RAR may be included in a MAC protocol data unit (PDU) of the PDSCH communication.

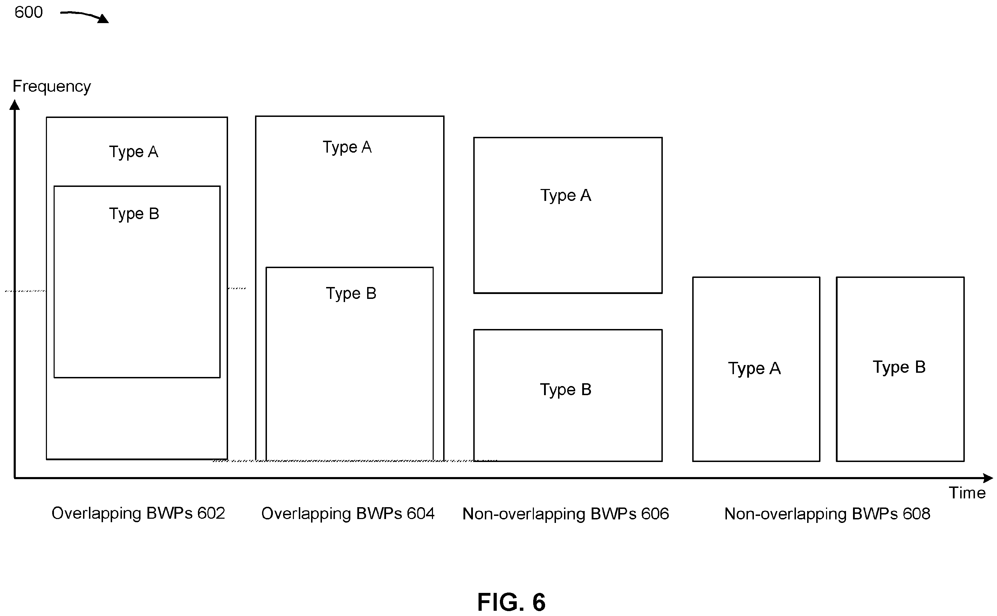

As shown by reference number 520, the UE 120 differentiates whether the RAR is intended for the UE 120 or a UE type of the UE 120. In some aspects, the UE 120 may determine if an RAR is to be decoded by the UE 120 based at least in part on an initial bandwidth part (BWP) configuration, which may be separately configured for each UE type. This is described in more detail in connection with Fig. 6. In some aspects, the UE 120 determines if an RAR is to be decoded based at least in part on a cyclic redundancy check (CRC). For example, the CRC may be masked with a radio network temporary identifier (RNTI) and the UE 120 may decode the RAR if the RNTI that is extracted from the CRC belongs to a particular set of RNTIs. In some aspects, the UE 120 determines the RAR is to be decoded based at least in part on an interleaving pattern or a scrambling identifier (ID) that is used. These aspects are described in more detail in connection with Fig. 7.

In some aspects, the UE 120 may have information about different resources that are used for PDCCH scheduling of an RAR. For example, the UE 120 may have information about a control resource set (CORESET) that differentiates between an RAR for a first UE type and an RAR for a second UE type. The RAR may be scheduled with a CORESET, and the UE 120 may determine that the RAR is to be decoded based at least in part on a location of the CORESET. Some CORESET locations may be set aside for UEs of the first UE type and some CORESET locations may be set aside for UEs of the second UE type.

In some aspects, the UE 120 may have information about a decoding or a quasi-co-located (QCLed) relation that is used for scheduling of an RAR. For example, the PDCCH may be QCLed with an SSB index that is set aside for UEs of a particular UE type. The UE 120 may determine that the RAR is to be decoded based at least in part on the SSB index.

In some aspects, the information may include one or more reserved bits or spare bits in downlink control information (DCI). For example, for DCI Format 1_0, a CRC may be masked by an RNTI (e.g., random access RNTI, msgB-RNTI, modified RNTI). The masking may use (or repurpose) reserved bits or the spare bits (e.g. most significant bits) to signal a UE type for an RAR. In some aspects, the UE 120 may use any combination of scheduling resources to determine if the UE 120 is to decode the RAR.

Multiple UE types can be supported in a serving cell or a RAN slice. In some aspects, the information may include one or more PRACH formats associated with each UE type, and the UE 120 may determine if the RAR is to be decoded based at least in part on a PRACH format that is used. One UE type may be mapped to multiple PRACH formats, and different UE types may be mapped to different PRACH formats. For example, UE types may be differentiated by location in a cell. Cell-center UEs (e.g., UEs that satisfy a distance threshold, or a maximum distance, from the cell center) can be mapped to PRACH preambles with a short length, and cell-edge UEs (UEs that do not satisfy a distance threshold, or the maximum distance, from the cell center) can be mapped to PRACH preambles with a longer length. The UE 120 may determine its distance with respect to the base station 110 by using, for example, a GPS and/or measurements.

In some aspects, PRACH preambles may be grouped into multiple sets characterized by different cyclic shifts. For example, for PRACH preambles sharing the same PRACH occasion, the size of the cyclic shift (e.g., cyclic prefix (CP)) may be scaled proportionally to a downlink RSRP of the UE 120. A CP for a physical uplink control channel (PUCCH), a physical uplink shared channel (PUSCH), or a sounding reference signal (SRS) may be a normal CP (NCP) or an extended CP (ECP). For example, the UE 120 may perform an RSRP measurement and compare the measurement with thresholds broadcast by the base station 110 to determine which PRACH preamble group to use.

UEs close to the cell center have a smaller round trip time (RTT), and UEs of this UE type (close UEs) may be mapped to a set of cyclic shifts with dense spacing or may be excluded from the PRACH resource selection by using PRACH-less transmission. UEs close to the cell edge may have a larger RTT, and UEs of this UE type (far UEs) may be mapped to a different set of cyclic shifts with sparse spacing. The UE 120 may determine if the RAR is to be decoded based at least in part on a spacing of the cyclic shift for the RAR.

As shown by reference number 525, the UE 120 may decode the RAR if the RAR is intended for the UE 120 or the UE type of the UE 120. If the RAR is not intended for the UE 120, the UE 120 may not decode the RAR, and conserve power and processing resources that would have otherwise been consumed by decoding and processing the RAR.

The UE may transmit a communication based at least in part on the communication. As shown by reference number 530, the UE 120 may transmit an RRC connection request message as the communication. The RRC connection request message may be referred to as message 3, Msg3, msg3, MSG3, or a third message of a 4-step RACH procedure. In some aspects, the RRC connection request may include a UE identifier, uplink control information (UCI), and/or a PUSCH communication (e.g., an RRC connection request). The base station 110 may transmit a hybrid automatic repeat request (HARQ) acknowledgement (ACK) for Msg3.

As shown by reference number 535, the base station 110 may transmit an RRC connection setup message. The RRC connection setup message may be referred to as message 4, Msg4, msg4, MSG4, or a fourth message of a 4-step RACH procedure. In some aspects, the RRC connection setup message may include the detected UE identifier, a timing advance value, and/or contention resolution information. If the UE 120 successfully receives the RRC connection setup message, the UE 120 may transmit a HARQ ACK. The UE 120 may transmit a HARQ ACK for Msg4. As shown by reference number 540, the base station 110 may transmit DCI with an uplink grant for an RRC connection setup complete message, which indicates that the UE 120 has completed setting up the RRC connection. As shown by reference number 545, the UE 120 may transmit the RRC connection setup complete message.

If 2-step RACH is to be used, Msg1 and Msg3 may be considered a first step (MsgA), and Msg2 and Msg4 may be considered a second step (MsgB). In this scenario, the UE 120 may transmit a communication based at least in part on differentiating the RAR of MsgB.

As indicated above, Fig. 5 is provided as an example. Other examples may differ from what is described with regard to Fig. 5.

Fig. 6 is a diagram illustrating an example 600 of overlapping and non-overlapping BWPs for differentiating RARs, in accordance with the present disclosure.

The UE 120 may determine to differentiate RARs for UE types based at least in part on an initial BWP configuration. The initial BWP configuration may indicate which BWP is activated for the UL and which BWP is activated for the DL. Configurations for an initial DL BWP and an initial UL BWP may be specified by standardized look-up tables, or indicated by system information. Example 600 shows different UE types, Type A and Type B. Type A may be, for example, UEs with energy harvesting capabilities, which are active during a time interval that is orthogonal to Type B UEs, which may be, for example, powered by non-rechargeable batteries.

In some aspects, both the initial DL BWP and the initial UL BWP may be shared between UEs with Type A and Type B capabilities. In some aspects, the initial DL BWP may be shared, but the initial UL BWP may be separately configured for Type A and Type B. The initial UL BWP for Type A and for Type B may partially overlap. Example 600 shows overlapping BWPs 602 that are aligned at a reference point that may be a center frequency of initial UE BWPs. Example 600 also shows overlapping BWPs 604 that are aligned at a starting physical resource block. The initial UL BWP for Type A and the initial UL BWP for Type B may be non-overlapping, such as shown by non-overlapping BWPs 606 (e.g., different sub-bands of a same carrier, different carriers (e.g., normal uplink (NUL) and supplementary uplink (SUL))). Non-overlapping BWPs 608 may be separated in time according to time division multiplexing (TDM) and/or have different timer configurations.

In some aspects, both the initial DL BWP and the initial UL BWP may be separately configured for Type A and for Type B. The initial DL BWPs and/or the initial UL BWPs may be partially overlapping and aligned at a reference point determined by the base station 110. In some aspects, the initial DL and/or UL BWP for Type A and the initial DL and/or UL BWP for Type B may be non-overlapping and mapped to different carriers (e.g., normal downlink (NDL) and supplementary downlink (SDL), NUL and SUL), mapped to different sub-bands of the same carrier, and/or mapped to different TDM time slots or different timer configurations.

As indicated above, Fig. 6 is provided as an example. Other examples may differ from what is described with regard to Fig. 6.

Fig. 7 is a diagram illustrating a process 700 of encoding a DCI for scheduling an RAR, in accordance with the present disclosure. Process 700 shows a DCI payload that is used to schedule an RAR and a CRC that may be attached to the DCI. As shown by process 700, an RNTI is used to mask the CRC (e.g., via a logical exclusive OR (XOR) operation) of DCI that schedules an RAR. The RNTI may belong to a first set of RNTIs that may be applied to mask the CRC of DCI that schedules a Type A RAR or belong to a second set of RNTIs that schedules a Type B RAR. There may be no intersection between the first set of RNTIs and the second set of RNTIs. The first set of RNTIs and the second set of RNTIs may be orthogonal. The RNTI of each set may be constructed according to a formula for a modified RNTI: modified RNTI = mod(1 + *s_id + S* × *t_id + S* × *T* × *f_id + S* × *T* × *F × ul_FDRA_id +* Δ*_{preamble},* 2*^{bitwidth_RNTI} -* 1), where *bitwidth_RNTI* may denote the number of bits allocated for the modified RNTI (upper bounded by the length of the CRC attached to the DCI), *s_id* may be the index of the first OFDM symbol of the PRACH occasion (0 ≤ *s_id < S,* and *S* is the max number of OFDM symbols per slot which depends on the subcarrier spacing (SCS) and CP length), *t_id* may be the index of the first slot of the PRACH occasion in a system frame (0 ≤ *t_id < T,* and *t_id* depends on the SCS and CP length), *f_id* may be the index of the PRACH occasion in the frequency domain (0 ≤ *f_id < F, F* depends on the initial UL BWP configurations of Type A and Type B UEs), and a starting point, a spacing, and a range of *f_id* (may take different values for Type A and Type B UEs), *ul_FDRA_id* may be the UL frequency domain resource allocation (FDRA) used for PRACH preamble transmission (e.g., 0 for NUL Carrier or the sub-band index allocated for Type A UE, and 1 for SUL carrier or the sub-band index allocated for Type B UE), and Δ*_preamble* depends on whether or not a Type A UE and a Type B UE share the same PRACH occasion (Δ*_preamble* = 0 for different PRACH occasions, and Δ*_preamble* ≥ *S*T*F*2* for a shared PRACH occasion and different preamble groups). The UE 120 may determine if the RAR is to be decoded based at least in part on whether an RNTI extracted from a masked CRC in the information (DCI scheduling the RAR) belongs to a set of RNTIs associated with the UE type of the UE 120. The base station 110 may partition values for the *s_id*, the *t_id,* and/or the *f_id* such that they distinguish UE types when the modified RNTI is calculated. This may save signaling resources (e.g., save a message that may be 16 bits).

Process 700 also shows that an interleaving pattern is applied to the CRC portion attached to the DCI scheduling the RAR. Applying the interleaving pattern to the CRC portion may include applying the interleaving pattern to the DCI in addition to the CRC portion. A first interleaving pattern is applied for Type A UEs, and a second interleaving pattern is applied for Type B UEs. There may be no intersection between a set of interleaving patterns for Type A and a set of interleaving patterns for Type B. The UE 120 determines if the RAR is to be decoded based at least in part on the interleaving pattern that is applied. The UE 120 applies an interleaving pattern associated with the UE type of the UE 120 and if the result indicates a decodable RAR, then the UE 120 decodes the RAR.

In some aspects, the PDCCH used for scheduling the RAR may be polar coded for the PDCCH. DMRS sequences of the PDCCH may also be scrambled with a sequence associated with a scrambling ID. The UE 120 may determine if the RAR is to be decoded based at least in part on the scrambling ID that is applied to the DMRS sequences. A first set of scrambling IDs may be associated with Type A UEs, and a second (orthogonal or non-intersecting) set of scrambling IDs may be associated with Type B UEs. In some aspects, the DCI may be scrambled with a sequence associated with a scrambling ID. The UE 120 may determine if the RAR is to be decoded based at least in part on the scrambling ID that is applied to the DCI or other coded bits of the PDCCH. By using an interleaving pattern, a scrambling ID, or other encoding feature, the UE 120 may differentiate RARs by UE type to determine if an RAR is to be decoded by the UE 120 or if the UE 120 is to conserve power and processing resources by not decoding the RAR.

Fig. 8 is a diagram illustrating a process 800 performed by a UE, in accordance with the present disclosure. Process 800 is a process where the UE (e.g., UE 120) performs operations associated with differentiating RARs.

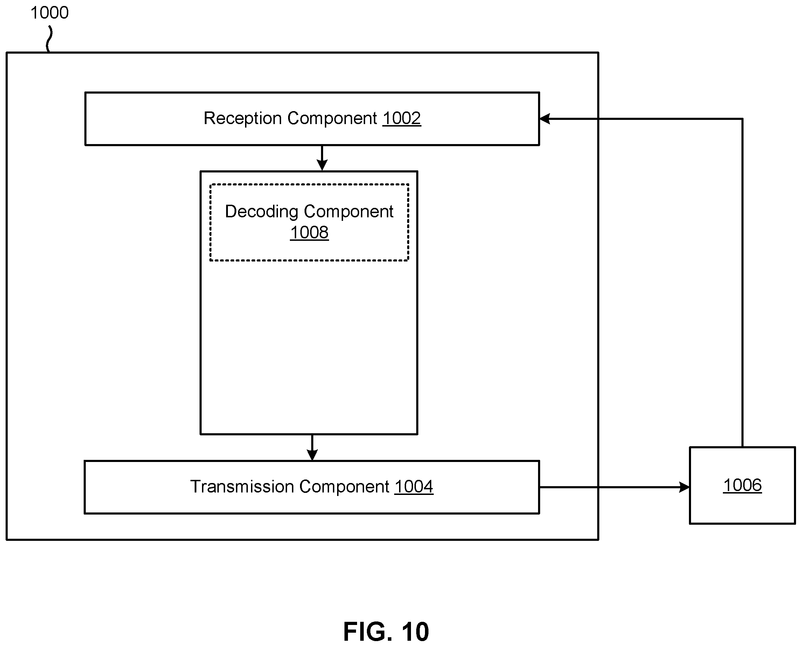

As shown in Fig. 8, in some aspects, process 800 includes receiving an RAR (block 810). For example, the UE (e.g., using reception component 1002 depicted in Fig. 10) may receive an RAR, as described above.

As further shown in Fig. 8, in some aspects, process 800 includes decoding the RAR based at least in part on information that differentiates RARs according to UE type (block 820). For example, the UE (e.g., using decoding component 1008 depicted in Fig. 10) may decode the RAR based at least in part on information that differentiates RARs according to UE type, as described above.

Process 800 may include additional aspects, such as any single aspect or any combination of aspects described below and/or in connection with one or more other processes described elsewhere herein.

In a first aspect, decoding the RAR based at least in part on the information includes decoding the RAR if the information indicates that the RAR is to be decoded by the UE type of the UE.

In a second aspect, alone or in combination with the first aspect, process 800 includes transmitting a communication based at least in part on the RAR.

In a third aspect, alone or in combination with one or more of the first and second aspects, the RAR is not decoded if the information does not indicate that the RAR is to be decoded by the UE type of the UE.

In a fourth aspect, alone or in combination with one or more of the first through third aspects, the information differentiates between an RAR for a first UE type and an RAR for a second UE type based at least in part on an initial BWP configuration.

In a fifth aspect, alone or in combination with one or more of the first through fourth aspects, the first UE type shares an initial uplink BWP with the second UE type.

In a sixth aspect, alone or in combination with one or more of the first through fifth aspects, an initial uplink BWP for the first UE type is different than an initial uplink BWP for the second UE type.

In a seventh aspect, alone or in combination with one or more of the first through sixth aspects, the initial uplink BWP for the first UE type and the initial uplink BWP for the second UE type partially overlap.

In an eighth aspect, alone or in combination with one or more of the first through seventh aspects, the initial uplink BWP for the first UE type and the initial uplink BWP for the second UE type are non-overlapping.

In a ninth aspect, alone or in combination with one or more of the first through eighth aspects, an initial downlink BWP for the first UE type is different than an initial downlink BWP for the second UE type.

In a tenth aspect, alone or in combination with one or more of the first through ninth aspects, the initial downlink BWP for the first UE type and the initial downlink BWP for the second UE type partially overlap.

In an eleventh aspect, alone or in combination with one or more of the first through tenth aspects, the initial downlink BWP for the first UE type and the initial downlink BWP for the second UE type are non-overlapping.

In a twelfth aspect, alone or in combination with one or more of the first through eleventh aspects, the information includes a CRC that is masked with an RNTI, and the RNTI differentiates between an RAR for a first UE type and an RAR for a second UE type.

In a thirteenth aspect, alone or in combination with one or more of the first through twelfth aspects, decoding the RAR based at least in part on the information includes extracting the RNTI from the CRC, calculating a modified RNTI based at least in part on one or more of an index value of a first symbol of a PRACH occasion of the RAR, an index of a first slot of the PRACH occasion in a system frame, and an index of the PRACH occasion in a frequency domain, and decoding the RAR if the RNTI extracted from the RNTI is in a set of RNTIs indicated by the modified RNTI.

In a fourteenth aspect, alone or in combination with one or more of the first through thirteenth aspects, the information includes a CRC that differentiates between an RAR for a first UE type and an RAR for a second UE type based at least in part on an interleaving pattern that is applied to the CRC.

In a fifteenth aspect, alone or in combination with one or more of the first through fourteenth aspects, decoding the RAR based at least in part on the information includes applying one or more of a first interleaving pattern or a second interleaving pattern to the CRC, where the first interleaving pattern is associated with the first UE type and the second interleaving pattern is associated with the second UE type, and decoding the RAR based at least in part on a result of the applying.

In a sixteenth aspect, alone or in combination with one or more of the first through fifteenth aspects, the information includes DMRS sequences that differentiate between an RAR for a first UE type and an RAR for a second UE type based at least in part on a scrambling ID set that is applied to the DMRS sequences.

In a seventeenth aspect, alone or in combination with one or more of the first through sixteenth aspects, decoding the RAR based at least in part on the information includes applying one or more of a first scrambling ID set or a second scrambling ID set to the DMRS sequences, where the first scrambling ID set is associated with the first UE type and the second scrambling ID set is associated with the second UE type, and decoding the RAR based at least in part on a result of the applying.

In an eighteenth aspect, alone or in combination with one or more of the first through seventeenth aspects, the information includes DCI that differentiates between an RAR for a first UE type and an RAR for a second UE type based at least in part on a scrambling ID set that is applied to the DCI.

In a nineteenth aspect, alone or in combination with one or more of the first through eighteenth aspects, decoding the RAR based at least in part on the information includes applying one or more of a first scrambling ID set or a second scrambling ID set to the DCI, where the first scrambling ID set is associated with the first UE type and the second scrambling ID set is associated with the second UE type, and decoding the RAR based at least in part on a result of the applying.

In a twentieth aspect, alone or in combination with one or more of the first through nineteenth aspects, the information includes a CORESET that differentiates between an RAR for a first UE type and an RAR for a second UE type based at least in part on a location (e.g., time-frequency resource) of the CORESET.

In a twenty-first aspect, alone or in combination with one or more of the first through twentieth aspects, the information includes a precoding or spatial domain that differentiates between an RAR for a first UE type and an RAR for a second UE type.

In a twenty-second aspect, alone or in combination with one or more of the first through twenty-first aspects, the information includes a QCLed relation or spatial relation for scheduling that differentiates between an RAR for a first UE type and an RAR for a second UE type.

In a twenty-third aspect, alone or in combination with one or more of the first through twenty-second aspects, the information includes a reserve bit or a spare bit in DCI (DCI payload) that indicates that the RAR is for a first UE type or for a second UE type.

In a twenty-fourth aspect, alone or in combination with one or more of the first through twenty-third aspects, the information includes one or more PRACH formats associated with a first UE type or one or more PRACH formats associated with a second UE type.

In a twenty-fifth aspect, alone or in combination with one or more of the first through twenty-fourth aspects, the information includes a CRC that differentiates between an RAR for a first UE type and an RAR for a second UE type based at least in part on being associated with a first set of PRACH preambles for the first UE type or a second set of PRACH preambles for the second UE type.

In a twenty-sixth aspect, alone or in combination with one or more of the first through twenty-fifth aspects, the first UE type includes UEs with a distance from a cell center that satisfies a distance threshold and the second UE type includes UEs with a distance from a cell center that does not satisfy the distance threshold.

In a twenty-seventh aspect, alone or in combination with one or more of the first through twenty-sixth aspects, process 800 includes, prior to receiving the RAR: obtaining an initial BWP configuration for random access that indicates an initial downlink BWP and an initial uplink BWP configured for a UE type of the UE, and transmitting a random access message within the initial uplink BWP configured for the UE type of the UE.

In a twenty-eighth aspect, alone or in combination with one or more of the first through twenty-seventh aspects, receiving the RAR includes receiving the RAR within the initial downlink BWP configured for the UE type of the UE.

In a twenty-ninth aspect, alone or in combination with one or more of the first through twenty-eighth aspects, obtaining the configuration includes receiving the configuration in a first initial downlink BWP.

In a thirtieth aspect, alone or in combination with one or more of the first through twenty-ninth aspects, the first initial downlink BWP is different than the initial downlink BWP configured for the UE type of the UE, and the information differentiates between an RAR for a first UE type and an RAR for a second UE type based at least in part on the initial BWP configuration.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating a process 900 performed by a base station, in accordance with the present disclosure. Process 900 is a process where the base station (e.g., base station 110) performs operations associated with differentiating RARs.

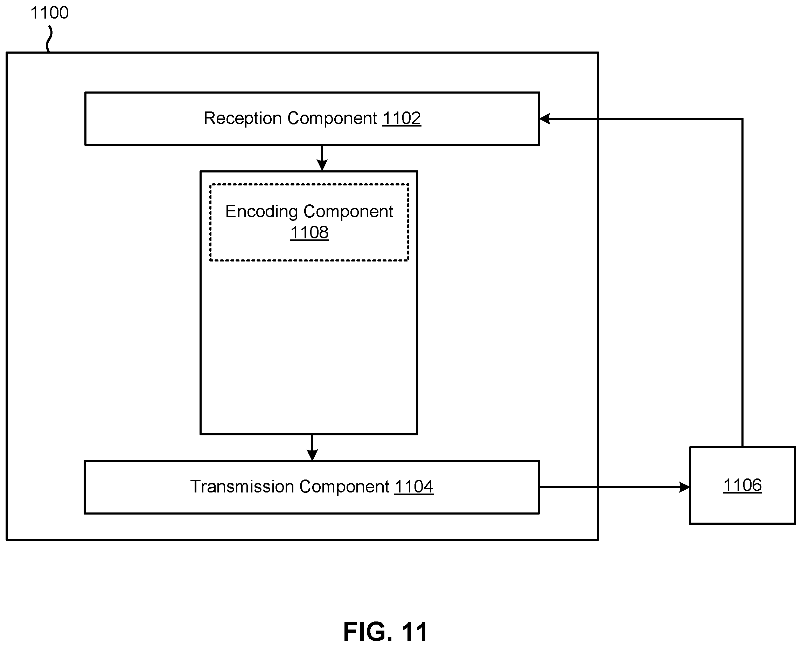

As shown in Fig. 9, in some aspects, process 900 includes encoding an RAR for a UE with information that differentiates RARs according to UE type and based at least in part on a UE type of the UE (block 910). For example, the base station (e.g., using encoding component 1108 depicted in Fig. 11) may encode an RAR for a UE with information that differentiates RARs according to UE type and based at least in part on a UE type of the UE, as described above.

As further shown in Fig. 9, in some aspects, process 900 includes transmitting the RAR to the UE (block 920). For example, the base station (e.g., using transmission component 1104 depicted in Fig. 11) may transmit the RAR to the UE, as described above.

Process 900 may include additional aspects, such as any single aspect or any combination of aspects described below and/or in connection with one or more other processes described elsewhere herein.

In a first aspect, process 900 includes receiving a communication based at least in part on the RAR.

In a second aspect, alone or in combination with the first aspect, the information differentiates between an RAR for a first UE type and an RAR for a second UE type based at least in part on an initial BWP configuration.

In a third aspect, alone or in combination with one or more of the first and second aspects, the first UE type shares an initial uplink BWP with the second UE type.

In a fourth aspect, alone or in combination with one or more of the first through third aspects, an initial uplink BWP for the first UE type is different than an initial uplink BWP for the second UE type.

In a fifth aspect, alone or in combination with one or more of the first through fourth aspects, the initial uplink BWP for the first UE type and the initial uplink BWP for the second UE type partially overlap.

In a sixth aspect, alone or in combination with one or more of the first through fifth aspects, the initial uplink BWP for the first UE type and the initial uplink BWP for the second UE type are non-overlapping.

In a seventh aspect, alone or in combination with one or more of the first through sixth aspects, an initial downlink BWP for the first UE type is different than an initial downlink BWP for the second UE type.

In an eighth aspect, alone or in combination with one or more of the first through seventh aspects, the initial downlink BWP for the first UE type and the initial downlink BWP for the second UE type partially overlap.

In a ninth aspect, alone or in combination with one or more of the first through eighth aspects, the initial downlink BWP for the first UE type and the initial downlink BWP for the second UE type are non-overlapping.

In a tenth aspect, alone or in combination with one or more of the first through ninth aspects, encoding the RAR based at least in part on the information includes calculating an RNTI based at least in part on one or more of an index value of a first symbol of a PRACH occasion for the RAR, an index of a first slot of the PRACH occasion in a system frame, and an index of the PRACH occasion in a frequency domain, where the RNTI differentiates between an RAR for a first UE type and an RAR for a second UE type, and masking a CRC of the RAR with the RNTI.

In an eleventh aspect, alone or in combination with one or more of the first through tenth aspects, the information includes a CRC that differentiates between an RAR for a first UE type and an RAR for a second UE type based at least in part on an interleaving pattern that is applied to the CRC.

In a twelfth aspect, alone or in combination with one or more of the first through eleventh aspects, the information includes DMRS sequences that differentiate between an RAR for a first UE type and an RAR for a second UE type based at least in part on a scrambling ID set that is applied to the DMRS sequences.

In a thirteenth aspect, alone or in combination with one or more of the first through twelfth aspects, the information includes DCI that differentiates between an RAR for a first UE type and an RAR for a second UE type based at least in part on a scrambling ID set that is applied to the DCI.

In a fourteenth aspect, alone or in combination with one or more of the first through thirteenth aspects, encoding the RAR based at least in part on the information includes placing a CORESET of the RAR in a location that differentiates between an RAR for a first UE type and an RAR for a second UE type.

In a fifteenth aspect, alone or in combination with one or more of the first through fourteenth aspects, the information includes a precoding that differentiates between an RAR for a first UE type and an RAR for a second UE type.

In a sixteenth aspect, alone or in combination with one or more of the first through fifteenth aspects, the information includes a QCLed relation for scheduling that differentiates between an RAR for a first UE type and an RAR for a second UE type.

In a seventeenth aspect, alone or in combination with one or more of the first through sixteenth aspects, the information includes a reserve bit or a spare bit in DCI that indicates that the RAR is for a first UE type or for a second UE type.

In an eighteenth aspect, alone or in combination with one or more of the first through seventeenth aspects, the information includes one or more PRACH formats associated with a first UE type or one or more PRACH formats associated with a second UE type.

In a nineteenth aspect, alone or in combination with one or more of the first through eighteenth aspects, the information includes a CRC that differentiates between an RAR for a first UE type and an RAR for a second UE type based at least in part on being associated with a first set of PRACH preambles for the first UE type or a second set of PRACH preambles for the second UE type.

In a twentieth aspect, alone or in combination with one or more of the first through nineteenth aspects, the first UE type includes UEs with a distance from a cell center that satisfies a distance threshold and the second UE type includes UEs with a distance from a cell center that does not satisfy the distance threshold.

In a twenty-first aspect, alone or in combination with one or more of the first through twentieth aspects, process 900 includes, prior to transmitting the RAR: transmitting, to a UE, an initial BWP configuration for random access that indicates an initial downlink BWP and an initial uplink BWP configured for a UE type of the UE; and receiving a random access message within the initial uplink BWP configured for the UE type of the UE.

In a twenty-second aspect, alone or in combination with one or more of the first through twenty-first aspects, transmitting the RAR includes transmitting the RAR within the initial downlink BWP configured for the UE type of the UE.

In a twenty-third aspect, alone or in combination with one or more of the first through twenty-second aspects, transmitting the configuration includes transmitting the configuration in a first initial downlink BWP.

In a twenty-fourth aspect, alone or in combination with one or more of the first through twenty-third aspects, the first initial downlink BWP is different than the initial downlink BWP configured for the UE type of the UE, and the information differentiates between an RAR for a first UE type and an RAR for a second UE type based at least in part on the initial BWP configuration.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a block diagram of an example apparatus 1000 for wireless communication. The apparatus 1000 may be a UE, or a UE may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE, a base station, or another wireless communication device) using the reception component 1002 and the transmission component 1004. As further shown, the apparatus 1000 may include a decoding component 1008, among other examples.

In some aspects, the apparatus 1000 may be configured to perform one or more operations described herein in connection with Figs. 1-7. Additionally, or alternatively, the apparatus 1000 may be configured to perform one or more processes described herein, such as process 800 of Fig. 8. In some aspects, the apparatus 1000 and/or one or more components shown in Fig. 10 may include one or more components of the UE described above in connection with Fig. 2. Additionally, or alternatively, one or more components shown in Fig. 10 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1000. In some aspects, the reception component 1002 may include one or more antennas, a demodulator, a MIMO detector, a receive processor, a controller/processor, a memory, or a combination thereof, of the UE described above in connection with Fig. 2.

The transmission component 1004 may transmit communications, such as reference signals, control information, data communications, or a combination thereof, to the apparatus 1006. In some aspects, one or more other components of the apparatus 1000 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas, a modulator, a transmit MIMO processor, a transmit processor, a controller/processor, a memory, or a combination thereof, of the UE described above in connection with Fig. 2. In some aspects, the transmission component 1004 may be co-located with the reception component 1002 in a transceiver.

The reception component 1002 may receive an RAR. The decoding component 1008 may decode the RAR based at least in part on information that differentiates RARs according to UE type. The transmission component 1004 may transmit a communication based at least in part on the RAR.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally, or alternatively, a set of (one or more) components shown in Fig. 10 may perform one or more functions described as being performed by another set of components shown in Fig. 10.

Fig. 11 is a block diagram of an example apparatus 1100 for wireless communication. The apparatus 1100 may be a base station, or a base station may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include one or more of an encoding component 1108, among other examples.

In some aspects, the apparatus 1100 may be configured to perform one or more operations described herein in connection with Figs. 1-7. Additionally, or alternatively, the apparatus 1100 may be configured to perform one or more processes described herein, such as process 900 of Fig. 9. In some aspects, the apparatus 1100 and/or one or more components shown in Fig. 11 may include one or more components of the base station described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1100. In some aspects, the reception component 1102 may include one or more antennas, a demodulator, a MIMO detector, a receive processor, a controller/processor, a memory, or a combination thereof, of the base station described above in connection with Fig. 2.

The transmission component 1104 may transmit communications, such as reference signals, control information, data communications, or a combination thereof, to the apparatus 1106. In some aspects, one or more other components of the apparatus 1100 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the base station described above in connection with Fig. 2. In some aspects, the transmission component 1104 may be co-located with the reception component 1102 in a transceiver.

The encoding component 1108 may encode an RAR for a UE with information that differentiates RARs according to UE type and based at least in part on a UE type of the UE. The transmission component 1104 may transmit the RAR to the UE. The reception component 1102 may receive a communication based at least in part on the RAR.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A user equipment, UE (120) for wireless communication, comprising:
a memory; and
one or more processors, coupled to the memory, configured to:
receive (515, 810) a random access response, RAR; and
decode (525, 820) the RAR based at least in part on information that differentiates RARs according to UE type, wherein said UE is **characterized in that**:
the information includes a cyclic
redundancy check, CRC attached to downlink control information, DCI for scheduling the RAR, wherein the CRC differentiates between a RAR for a first UE type and a RAR for a second UE type based at least in part on an interleaving pattern that is applied to the CRC, and wherein the one or more processors, to decode the RAR based at least in part on the information, are configured to:
apply an interleaving pattern to the CRC, said interleaving pattern being associated with the UE type of the UE, the interleaving pattern being a first interleaving pattern or a second interleaving pattern, wherein the first interleaving pattern is associated with the first UE type and the second interleaving pattern is associated with the second UE type; and
decode the RAR based at least in part on a result of the applying.

2. The UE of claim 1, wherein the one or more processors are configured to, prior to receiving the RAR:
obtain an initial bandwidth part, BWP configuration for random access that indicates an initial downlink BWP and an initial uplink BWP configured for a UE type of the UE; and
transmit a random access message within the initial uplink BWP configured for the UE type of the UE.

3. The UE of claim 2, wherein the one or more processors, to receive the RAR, are configured to receive the RAR within the initial downlink BWP configured for the UE type of the UE.

4. The UE of claim 2, wherein the one or more processors, to obtain the configuration, are configured to receive the configuration in a first initial downlink BWP.

5. The UE of claim 1, wherein the one or more processors are configured to differentiate between an RAR for a first UE type and an RAR for a second UE type based at least in part on an initial bandwidth part, BWP configuration.

6. The UE of claim 5, wherein the first UE type shares an initial uplink BWP with the second UE type; or wherein an initial uplink BWP for the first UE type is different than an initial uplink BWP for the second UE type .

7. The UE of claim 1, wherein the, CRC, is masked with a radio network temporary identifier, RNTI, and wherein the RNTI differentiates between an RAR for a first UE type and an RAR for a second UE type.

8. The UE of claim 1, wherein the information further includes demodulation reference signal, DMRS sequences that differentiate between an RAR for a first UE type and an RAR for a second UE type based at least in part on a scrambling identifier, ID set that is applied to the DMRS sequences.

9. The UE of claim 8 wherein the one or more processors, to decode the RAR based at least in part on the information, are configured to:
apply one or more of a first scrambling ID set or a second scrambling ID set to the DMRS sequences, wherein the first scrambling ID set is associated with the first UE type and the second scrambling ID set is associated with the second UE type; and
decode the RAR based at least in part on a result of the applying.

10. The UE of claim 1, wherein the DCI further differentiates between an RAR for a first UE type and an RAR for a second UE type based at least in part on a scrambling identifier, ID set that is applied to the DCI.

11. The UE of claim 1, wherein the information further includes a control resource set, CORESET that differentiates between an RAR for a first UE type and an RAR for a second UE type based at least in part on a location of the CORESET.

12. The UE of claim 1, wherein the information further includes a precoding that differentiates between an RAR for a first UE type and an RAR for a second UE type.

13. The UE of claim 1, wherein the information further includes one or more physical random access channel, PRACH formats associated with a first UE type or one or more PRACH formats associated with a second UE type.

14. The UE of claim 1, wherein the CRC further differentiates between an RAR for a first UE type and an RAR for a second UE type based at least in part on being associated with a first set of physical random access channel, PRACH preambles for the first UE type or a second set of PRACH preambles for the second UE type.

15. A base station (110) for wireless communication, comprising:
a memory; and
one or more processors, coupled to the memory, configured to:
encode (910) a random access response, RAR for a user equipment, UE with information that differentiates RARs according to UE type and based at least in part on a UE type of the UE, and
transmit (920) the RAR to the UE (120),
wherein said base station is **characterized in that**:
the information includes a cyclic redundancy check, CRC attached to downlink control information DCI for scheduling the RAR, wherein the CRC differentiates between a RAR for a first UE type and a RAR for a second UE type based at least in part on an interleaving pattern that is applied to the CRC.

## Patentansprüche

1. Ein Benutzergerät (User Equipment bzw. UE) (120) für eine drahtlose Kommunikation, aufweisend:
einen Speicher, und
einen oder mehrere Prozessoren, die mit dem Speicher gekoppelt sind und konfiguriert sind zum:
Empfangen (515, 810) einer Direktzugriffsantwort (Random Access Response bzw. RAR), und
Decodieren (525, 820) der RAR basierend wenigstens teilweise auf Informationen, die RARs gemäß dem UE-Typ differenzieren, wobei das UE **dadurch gekennzeichnet ist, dass**:
die Informationen eine zyklische Redundanzprüfung (Cyclical Redundancy Check bzw. CRC) enthalten, die an Downlink-Steuerinformationen (Downlink Control Information bzw. DCI) für das Planen der RAR angehängt ist, wobei die CRC zwischen einer RAR für einen ersten UE-Typ und einer RAR für einen zweiten UE-Typ basierend wenigstens teilweise auf einem auf die CRC angewendeten Verschachtelungsmuster differenziert, und wobei der eine oder die mehreren Prozessoren für das Decodieren der RAR basierend wenigstens teilweise auf den Informationen konfiguriert sind zum:
Anwenden eines Verschachtelungsmusters auf die CRC, wobei das Verschachtelungsmuster mit dem UE-Typ des UE assoziiert ist, wobei das Verschachtelungsmuster ein erstes Verschachtelungsmuster oder ein zweites Verschachtelungsmuster ist, wobei das erste Verschachtelungsmuster mit dem ersten UE-Typ assoziiert ist und das zweite Verschachtelungsmuster mit dem zweiten UE-Typ assoziiert ist, und
Decodieren der RAR basierend wenigstens teilweise auf einem Ergebnis des Anwendens.

2. UE nach Anspruch 1, wobei der eine oder die mehreren Prozessoren konfiguriert sind zum, vor dem Empfangen der RAR:
Erhalten einer anfänglichen Bandbreitenteil (Bandwidth-Part bzw. BWP)-Konfiguration für einen Direktzugriff, die einen anfänglichen Downlink-BWP und einen anfänglichen Uplink-BWP, die für einen UE-Typ des UE konfiguriert sind, angibt, und
Senden einer Direktzugriffsnachricht in dem anfänglichen Uplink-BWP, der für den UE-Typ des UE konfiguriert ist.

3. UE nach Anspruch 2, wobei der eine oder die mehreren Prozessoren für das Empfangen der RAR konfiguriert sind zum Empfangen der RAR in dem anfänglichen Downlink-BWP, der für den UE-Typ des UE konfiguriert ist.

4. UE nach Anspruch 2, wobei der eine oder die mehreren Prozessoren für das Erhalten der Konfiguration konfiguriert sind zum Empfangen der Konfiguration in einem ersten anfänglichen Downlink-BWP.

5. UE nach Anspruch 1, wobei der eine oder die mehreren Prozessoren konfiguriert sind zum Differenzieren zwischen einer RAR für einen ersten UE-Typ und einer RAR für einen zweiten UE-Typ basierend wenigstens teilweise auf einer anfänglichen Bandbreitenteil (Bandwidth-Part bzw. BWP)-Konfiguration.

6. UE nach Anspruch 5, wobei der erste UE-Typ einen anfänglichen Uplink-BWP mit dem zweiten UE-Typ gemeinsam verwendet, oder wobei ein anfänglicher Uplink-BWP für den ersten UE-Typ von einem anfänglichen Uplink-BWP für den zweiten UE-Typ verschieden ist.

7. UE nach Anspruch 1, wobei die CRC mit einer Funknetz-Temporärkennung (Radio Network Temporary Identifier bzw. RNTI) maskiert ist und wobei die RNTI zwischen einer RAR für einen ersten UE-Typ und einer RAR für einen zweiten UE-Typ differenziert.

8. UE nach Anspruch 1, wobei die Informationen weiterhin Demodulationsreferenzsignal (DMRS)-Sequenzen enthalten, die zwischen einer RAR für einen ersten UE-Typ und einer RAR für einen zweiten UE-Typ basierend wenigstens teilweise auf einem Verwürfelungskennung (Verwürfelungs-ID)-Satz, der auf die DMRS-Sequenzen angewendet wird, differenzieren.

9. UE nach Anspruch 8, wobei der eine oder die mehreren Prozessoren für das Decodieren der RAR basierend wenigstens teilweise auf den Informationen konfiguriert sind zum:
Anwenden eines ersten Verwürfelungs-ID-Satzes und/oder eines zweiten Verwürfelungs-ID-Satzes auf die DMRS-Sequenzen, wobei der erste Verwürfelungs-ID-Satz mit dem ersten UE-Typ assoziiert ist und der zweite Verwürfelungs-ID-Satz mit dem zweiten UE-Typ assoziiert ist, und
Decodieren der RAR basierend wenigstens teilweise auf einem Ergebnis des Anwendens.

10. UE nach Anspruch 1, wobei die DCI weiterhin zwischen einer RAR für einen ersten UE-Typ und einer RAR für einen zweiten UE-Typ basierend wenigstens teilweise auf einem Verwürfelungskennung (Verwürfelungs-ID)-Satz, der auf die DCI angewendet wird, differenzieren.

11. UE nach Anspruch 1, wobei die Informationen weiterhin einen Steuerressourcensatz (Control Resource Set bzw. CORESET) enthalten, der zwischen einer RAR für einen ersten UE-Typ und einer RAR für einen zweiten UE-Typ basierend wenigstens teilweise auf der Position des CORESET differenziert.

12. UE nach Anspruch 1, wobei die Informationen weiterhin eine Vorcodierung enthalten, die zwischen einer RAR für einen ersten UE-Typ und einer RAR für einen zweiten UE-Typ differenziert.

13. UE nach Anspruch 1, wobei die Informationen weiterhin ein oder mehrere Physikalischer-Direktzugriffskanal (PRACH)-Formate, die mit einem ersten UE-Typ assoziiert sind, oder ein oder mehrere PRACH-Formate, die mit einem zweiten UE-Typ assoziiert sind, enthalten.

14. UE nach Anspruch 1, wobei die CRC weiterhin zwischen einer RAR für einen ersten UE-Typ und einer RAR für einen zweiten UE-Typ basierend wenigstens teilweise darauf, dass sie mit einem ersten Satz von Physikalischer-Direktzugriffskanal (PRACH)-Präambeln für den ersten UE-Typ oder einem zweiten Satz von PRACH-Präambeln für den zweiten UE-Typ assoziiert ist, differenziert.

15. Eine Basisstation (110) für eine drahtlose Kommunikation, aufweisend:
einen Speicher, und
einen oder mehrere Prozessoren, die mit dem Speicher gekoppelt sind und konfiguriert sind zum:
Codieren (910) einer Direktzugriffsantwort (Random Access Response bzw. RAR) für ein Benutzergerät (User Equipment bzw. UE) mit Informationen, die RARs gemäß dem UE-Typ differenzieren, und basierend wenigstens teilweise auf einem UE-Typ des UE, und
Senden (920) der RAR an das UE (120),
wobei die Basisstation **dadurch gekennzeichnet ist, dass**:
die Informationen eine zyklische Redundanzprüfung (Cyclic Redundancy Check bzw. CRC) enthalten, die an Downlink-Steuerinformationen (Downlink Control Information bzw. DCI) für das Planen der RAR angehängt ist, wobei die CRC zwischen einer RAR für einen ersten UE-Typ und einer RAR für einen zweiten UE-Typ basierend wenigstens teilweise auf einem auf die CRC angewendeten Verschachtelungsmuster differenziert.

## Revendications

1. Équipement d'utilisateur, UE (120), pour la communication sans fil, comprenant :
une mémoire ; et
un ou plusieurs processeurs, couplés à la mémoire, configurés pour :
recevoir (515, 810) une réponse d'accès aléatoire, RAR ; et
décoder (525, 820) la RAR sur la base, au moins en partie, d'informations qui différencient les RAR en fonction du type d'DE, ledit UE étant **caractérisé en ce que** :
les informations comprennent un contrôle de redondance cyclique, CRC, associé à des informations de contrôle de liaison descendante, DCI, pour l'ordonnancement de la RAR, le CRC faisant la distinction entre une RAR pour un premier type d'UE et une RAR pour un second type d'UE sur la base, au moins en partie, d'un motif d'entrelacement appliqué au CRC, et le ou les processeurs, pour décoder la RAR sur la base, au moins en partie, desdites informations, sont configurés pour :
appliquer un motif d'entrelacement au CRC, ledit motif d'entrelacement étant associé au type d'UE de l'UE, le motif d'entrelacement étant un premier motif d'entrelacement ou un second motif d'entrelacement, le premier motif d'entrelacement étant associé au premier type d'UE et le second motif d'entrelacement étant associé au second type d'UE ; et
décoder la RAR sur la base, au moins en partie, d'un résultat de ladite application.

2. L'UE selon la revendication 1, dans lequel, avant de recevoir la RAR, le ou les processeurs sont configurés pour :
obtenir une configuration initiale de partie de largeur de bande, BWP, pour l'accès aléatoire, qui indique une BWP de liaison descendante initiale et une BWP de liaison montante initiale configurées pour un type d'UE de l'UE ; et
transmettre un message d'accès aléatoire dans la BWP de liaison montante initiale configurée pour le type d'UE de l'UE.

3. L'UE selon la revendication 2, dans lequel, pour recevoir la RAR, le ou les processeurs sont configurés pour recevoir la RAR dans la BWP de liaison descendante initiale configurée pour le type d'UE de l'UE.

4. L'UE selon la revendication 2, dans lequel, pour obtenir la configuration, le ou les processeurs sont configurés pour recevoir la configuration dans une première BWP initiale de liaison descendante.

5. L'UE selon la revendication 1, dans lequel le ou les processeurs sont configurés pour faire la distinction entre une RAR pour un premier type d'UE et une RAR pour un deuxième type d'UE sur la base, au moins en partie, d'une configuration initiale de largeur de bande, BWP.

6. L'UE selon la revendication 5, dans lequel le premier type d'UE partage une BWP initiale de liaison montante avec le deuxième type d'UE ; ou dans lequel une BWP initiale de liaison montante pour le premier type d'UE est différente d'une BWP initiale de liaison montante pour le deuxième type d'DE.

7. L'UE selon la revendication 1, dans lequel le CRC est masqué par un identifiant temporaire de réseau radio, RNTI, et dans lequel le RNTI permet de distinguer un RAR pour un premier type d'UE d'un RAR pour un deuxième type d'UE.

8. L'UE selon la revendication 1, dans lequel les informations comprennent en outre des séquences de signal de référence de démodulation, DMRS, qui font la distinction entre un RAR pour un premier type d'UE et un RAR pour un deuxième type d'UE sur la base, au moins en partie, d'un ensemble d'identifiants, ID, de brouillage appliqué aux séquences DMRS.

9. L'UE selon la revendication 8, dans lequel, pour décoder la RAR sur la base, au moins en partie, des informations, le ou les processeurs sont configurés pour :
appliquer un ou plusieurs parmi un premier ensemble d'identifiants de brouillage ou un deuxième ensemble d'identifiants de brouillage aux séquences DMRS, le premier ensemble d'identifiants de brouillage étant associé au premier type d'UE et le deuxième ensemble d'identifiants de brouillage étant associé au deuxième type d'UE ; et
décoder la RAR sur la base, au moins en partie, d'un résultat de cette application.

10. L'UE selon la revendication 1, dans lequel les DCI font en outre la distinction entre une RAR pour un premier type d'UE et une RAR pour un deuxième type d'UE sur la base, au moins en partie, d'un ensemble d'identifiants, ID, de brouillage, qui est appliqué aux DCI.

11. L'UE selon la revendication 1, dans lequel les informations comprennent en outre un ensemble de ressources de contrôle, CORESET, qui établit une distinction entre une RAR pour un premier type d'UE et une RAR pour un deuxième type d'UE sur la base, au moins en partie, d'un emplacement du CORESET.

12. L'UE selon la revendication 1, dans lequel les informations comprennent en outre un précodage qui établit une distinction entre une RAR pour un premier type d'UE et une RAR pour un deuxième type d'DE.

13. L'UE selon la revendication 1, dans lequel les informations comprennent en outre un ou plusieurs formats de canal physique à accès aléatoire, PRACH, associés à un premier type d'UE ou un ou plusieurs formats PRACH associés à un deuxième type d'DE.

14. L'UE selon la revendication 1, dans lequel le CRC établit en outre une distinction entre une RAR pour un premier type d'UE et une RAR pour un deuxième type d'UE en se basant, au moins en partie, sur l'association à un premier ensemble de préambules de canal physique à accès aléatoire, PRACH, pour le premier type d'UE ou à un deuxième ensemble de préambules PRACH pour le deuxième type d'UE.

15. Une station de base (110) pour la communication sans fil, comprenant :
une mémoire ; et
un ou plusieurs processeurs, couplés à la mémoire, configurés pour :
coder (910) une réponse d'accès aléatoire, RAR, pour un équipement d'utilisateur, UE, avec des informations qui différencient les RAR en fonction du type d'UE et sur la base, au moins en partie, d'un type d'UE de l'UE ; et
transmettre (920) la RAR à l'UE (120),
ladite station de base étant **caractérisée en ce que** :
les informations comprennent un contrôle de redondance cyclique, CRC, associé à des informations de contrôle de liaison descendante, DCI, pour planifier la RAR, le CRC faisant la distinction entre une RAR pour un premier type d'UE et une RAR pour un deuxième type d'UE sur la base, au moins en partie, d'un motif d'entrelacement appliqué au CRC.
